# EUROPEAN PATENT APPLICATION

(11) **EP 4 648 373 A1**
(43) Date of publication of application: **12.11.2025**
(21) Application number: 25174487.6
(22) Date of filing: 06.05.2025
(51) Int. Cl.: H04L 41/0806, H04L 41/12

(54) **METHOD, DEVICE, AND SYSTEM FOR DATA TRANSMISSION BETWEEN NETWORK NODES OF A NETWORK**

(30) Priority: 07.05.2024 IN 202441036262; 07.04.2025 GB 202505210
(71) Applicant: Cambium Networks Ltd, Ashburton, Devon TQ13 7UP (GB)
(72) Inventor: SINGH, Radhamohan, 560087 Karnataka (IN); MAHAPATRA, Niraj, 752050 Odisha (IN); TADAKAMADLA, Shashank, 560037 Bangalore (IN)
(74) Representative: EIP

(57) **Abstract**

This disclosure relates to method, device, and system for data transmission between network nodes of a network. The method may include receiving, by a processing node, a Link Layer Discovery Protocol (LLDP) frame from each network node of the plurality of network nodes. The method may further include extracting, by the processing node, information related to each interface and port available in the plurality of network nodes from the LLDP frame. The method may further include transmitting, by the processing node, the information in a single data packet to an Access Point (AP) node of the distributed network.

## Description

### Technical Field

This disclosure relates generally to network management, and more particularly to method, device, and system for data transmission between network nodes of a distributed network.

### Background

Network devices (e.g., hubs, repeaters, bridges, switches, routers, gateways, etc.) are physical devices that allow hardware on a computer network to communicate with each other. The network devices use Link Layer Discovery Protocol (LLDP), an open-source and vendor-neutral link layer protocol, to share information (such as identities, capabilities, and details related to neighbors) with each other over a network. The information may be used to ensure consistent configuration and management across the network.

The network devices may be connected to an access point through a switch. The switch may transmit the information shared by the network devices to a server (e.g., a cloud server). In the present state of art, the information contained within an LLDP frame is related to a port of a network device that is connected to the switch. The server may then process the information and optimally manage and configure the access point. Thus, the access point receives the information from the server for controlling traffic of the network. Such a process increases latency in network configuration and management as the LLDP frames are processed in the server. An increase in latency may result in improper management and configuration of resources in the network. In addition, the access point acquires port information of merely a connected port of the network device. As a result, the access point is unable to effectively manage traffic of each network node of the network due to absence of port information of other network devices.

The present invention is directed to overcome one or more limitations associated with the known arts stated above.

### SUMMARY

In one embodiment, a method for data transmission between a plurality of network nodes of a distributed network is disclosed. In one example, the method includes receiving, by a processing node, a Link Layer Discovery Protocol (LLDP) frame from each network node of the plurality of network nodes. The method further includes extracting, by the processing node, information related to each interface and port available in the plurality of network nodes from the LLDP frame. The method further includes transmitting, by the processing node, the information in a single data packet to an Access Point (AP) node of the distributed network.

In one embodiment, a processing node is disclosed. In one example, the processing node includes a processor and a memory communicatively coupled to the processor. The memory stores processor-executable instructions, which, on execution, causes the processor to receive an LLDP frame from each network node of the plurality of network nodes. The processor-executable instructions, on execution, further causes the processor to extract information related to each interface and port available in the plurality of network nodes from the LLDP frame. The processor-executable instructions, on execution, further causes the processor to transmit the information in a single data packet to an AP node of the distributed network.

In one embodiment, a system for managing communication between a plurality of network nodes of a distributed network is disclosed. In one example, the system includes a processing node including a first processor and a first memory. The first memory is be communicatively coupled to the first processor, and stores first processor instructions, which, on execution, causes the first processor to receive an LLDP frame from each network node of the plurality of network nodes. The first processor instructions, on execution, further causes the first processor to extract information related to each interface and port available in the plurality of network nodes from the LLDP frame. The first processor instructions, on execution, further causes the first processor to transmit the information in a single data packet to an AP node of the distributed network. The system further includes the AP node. The AP node includes a second processor and a second memory. The second memory is be communicatively coupled to the second processor and includes second processor instructions that when executed by the second processor, causes the second processor to receive the information related to each interface and port available in the plurality of network nodes. The second processor instructions, when executed by the second processor, further causes the second processor to manage activities of the plurality of network nodes based on the information related to each interface and port available in the plurality of network nodes.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles.
**FIG. 1** illustrates an exemplary network where various embodiments may be deployed.
**FIG. 2** illustrates a functional block diagram of an exemplary system for managing communication between a plurality of network nodes of a distributed network, in accordance with some embodiments.
**FIG. 3** illustrates a block diagram of an exemplary system for managing communication between various types of network nodes in a distributed network, in accordance with some embodiments.
**FIG. 4** illustrates a block diagram of an exemplary system for managing communication between network nodes of various vendors in a distributed network, in accordance with some embodiments.
**FIGS. 5A** **and** **5B** illustrate a block diagram of an exemplary system for managing communication between network nodes in a complex distributed network, in accordance with some embodiments.
**FIG. 6** illustrates a flow diagram of an exemplary process for data transmission between a plurality of network nodes of a distributed network, in accordance with some embodiments.
**FIG. 7** illustrates a flow diagram of an exemplary process for controlling communication of each of a plurality of network nodes of a distributed network, in accordance with some embodiments.
**FIG. 8** is a block diagram of an exemplary computer system for implementing embodiments consistent with the present disclosure.

### DETAILED DESCRIPTION

Exemplary embodiments are described with reference to the accompanying drawings. Wherever convenient, the same reference numbers are used throughout the drawings to refer to the same or like parts. While examples and features of disclosed principles are described herein, modifications, adaptations, and other implementations are possible without departing from the spirit and scope of the disclosed embodiments. It is intended that the following detailed description be considered as exemplary only, with the true scope and spirit being indicated by the following claims.

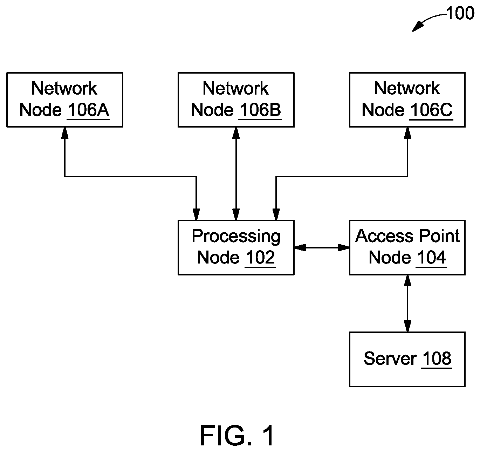

Referring now to FIG. 1, an exemplary network 100 where various embodiments may be deployed is illustrated, in accordance with some embodiments of the present disclosure. By way of an example, the network 100 may be, but may not be limited to, an ethernet network. In an embodiment, the network 100 may be a distributed network. The network 100 may include a processing node 102 (e.g., a switch or a bridge), an Access Point (AP) node 104, a plurality of network nodes (e.g., a network node 106A, a network node 106B, and a network node 106C), and a server 108. The network node 106A, the network node 106B, and the network node 106C are collectively referred to as "plurality of network nodes 106" from hereon. The plurality of network nodes 106 may be network devices (such as routers, switches, transmitters, receivers, Internet Protocol (IP) telephones, IP video cameras, wireless APs, repeaters, and bridges) or end computing devices (for example, Internet of Things (IoT) devices servers, desktops, laptops, notebooks, netbooks, tablets, smartphones, mobile phones, or any other computing devices). Each of the plurality of network nodes 106 may include one or more ports and interfaces. Each of the plurality of network nodes 106 may be connected to the processing node 102 through the one or more ports and interfaces. The processing node 102 may be connected to the AP node 104 through an interface (for example, an ethernet interface). The AP node 104 may further be connected to the server 108.

The processing node 102 may receive a plurality of Link Layer Discovery Protocol (LLDP) frames from the plurality of network nodes 106. In other words, the processing node 102 may receive a first LLDP frame from the network node 106A, a second LLDP frame from the network node 106B, and a third LLDP frame from the network node 106C. An LLDP frame from a network node may include information related to each interface and port available in the network node. By way of an example, the information may include, but may not be limited to, at least one of Chassis identity (ID), port ID, port details, Operation System (OS) details, Power over Ethernet (PoE), Virtual Local Area Network (VLAN), location, media capabilities, networks policies, custom Type-Length-Values (TLVs), system description, system capabilities, and managed address.

Further, the processing node 102 may transmit each of the plurality of LLDP frames (i.e., the first LLDP frame, the second LLDP frame, and the third LLDP frame) individually to the AP node 104. The AP node 104 may further transmit each of the plurality of LLDP frames to the server 108. The server 108 may then process the information from each of the plurality of LLDP frames to accordingly manage and prioritize data transmission among the plurality of network nodes 106 in the network 100.

The processing in the server 108 may introduce a latency in network management, which may cause inaccurate allocation of network resources. Network requirements may change dynamically due to various reasons (such as change in data consumption of one or more of the plurality of network nodes 106, handover of one or more of the plurality of network nodes 106 to a different AP, etc.). For example, a latency of 2-3 seconds may lead to a significant error in network configuration and management as the network requirements may have changed in a time period of 2-3 seconds.

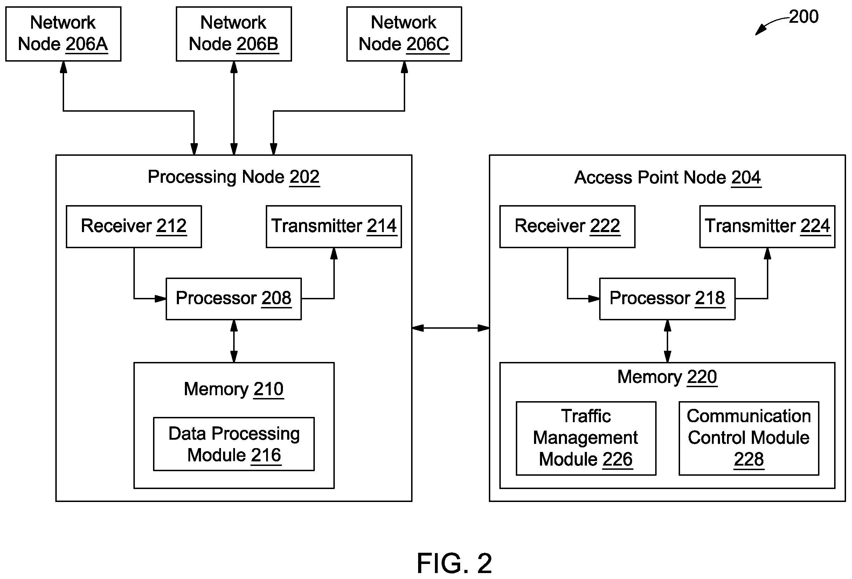

Referring now to FIG. 2, a functional block diagram of an exemplary system 200 for managing communication between a plurality of network nodes of a distributed network is illustrated, in accordance with some embodiments. In an embodiment, the system 200 may be implemented in the network 100. The system 200 may include a processing node 202 (analogous to the processing node 102), an AP node 204 (analogous to the AP node 104), and a plurality of network nodes (such as, a network node 206A, a network node 206B, and a network node 206C; analogous to the plurality of network nodes 106). The processing node 202 may be connected to the AP node 204 through a first interface (for example, an ethernet interface). Each of the network node 206A, the network node 206B, and the network node 206C may be connected to the processing node 202 through a second ethernet interface.

The processing node 202 may include a processor 208, a memory 210, a receiver 212, and a transmitter 214. The memory 210 may include a data processing module 216. The AP node 204 may include a processor 218, a memory 220, a receiver 222, and a transmitter 224. The memory 220 may include a traffic management module 226 and a communication control module 228.

The receiver 212 of the processing node 202 may receive an LLDP frame from each network node of the plurality of network nodes 206. In other words, the receiver 212 may receive a first LLDP frame from the network node 206A, a second LLDP frame from the network node 206B, and a third LLDP frame from the network node 206C. The LLDP frame may include information related to each interface and port available in the plurality of network nodes. The information may include, but may not be limited to, a Chassis ID, port ID, port details, OS details, PoE, VLAN, location, media capabilities, networks policies, custom TLVs, system description, system capabilities, and managed address.

The receiver 212 of the processing node 202 may receive a first user command to enable extraction of the information related to each interface and port available in the plurality of network nodes from the LLDP frame. By way of an example, the first user command may be "LLDP-extended-interface-info enable". Additionally, the receiver 212 of the processing node 202 may receive a second user command to disable extraction of the information related to each interface and port available in the plurality of network nodes from the LLDP frame. By way of an example, the second user command may be "LLDP-extended-interface-info disable". When the receiver 212 receives the second user command, the system 200 may function in a conventional mode (i.e., the processing node 202 may receive individual LLDP frames from the plurality of network nodes and transmit the individual LLDP frames to the AP node 204). In an embodiment, the first user command and the second user command may be received from an administrator device (such as the server 108). The receiver 212 may then send the first LLDP frame, the second LLDP frame, and the third LLDP frame to the data processing module 216.

By way of an example, the first LLDP frame may be as follows:

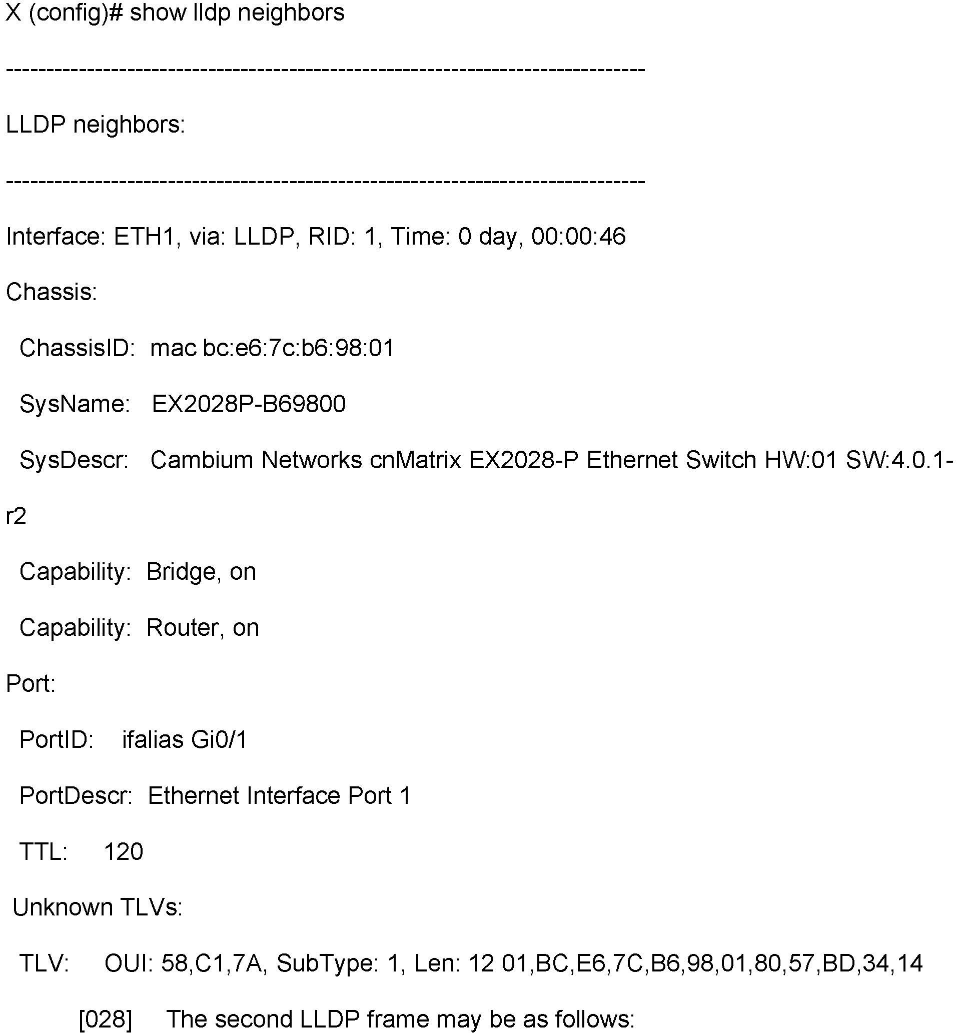

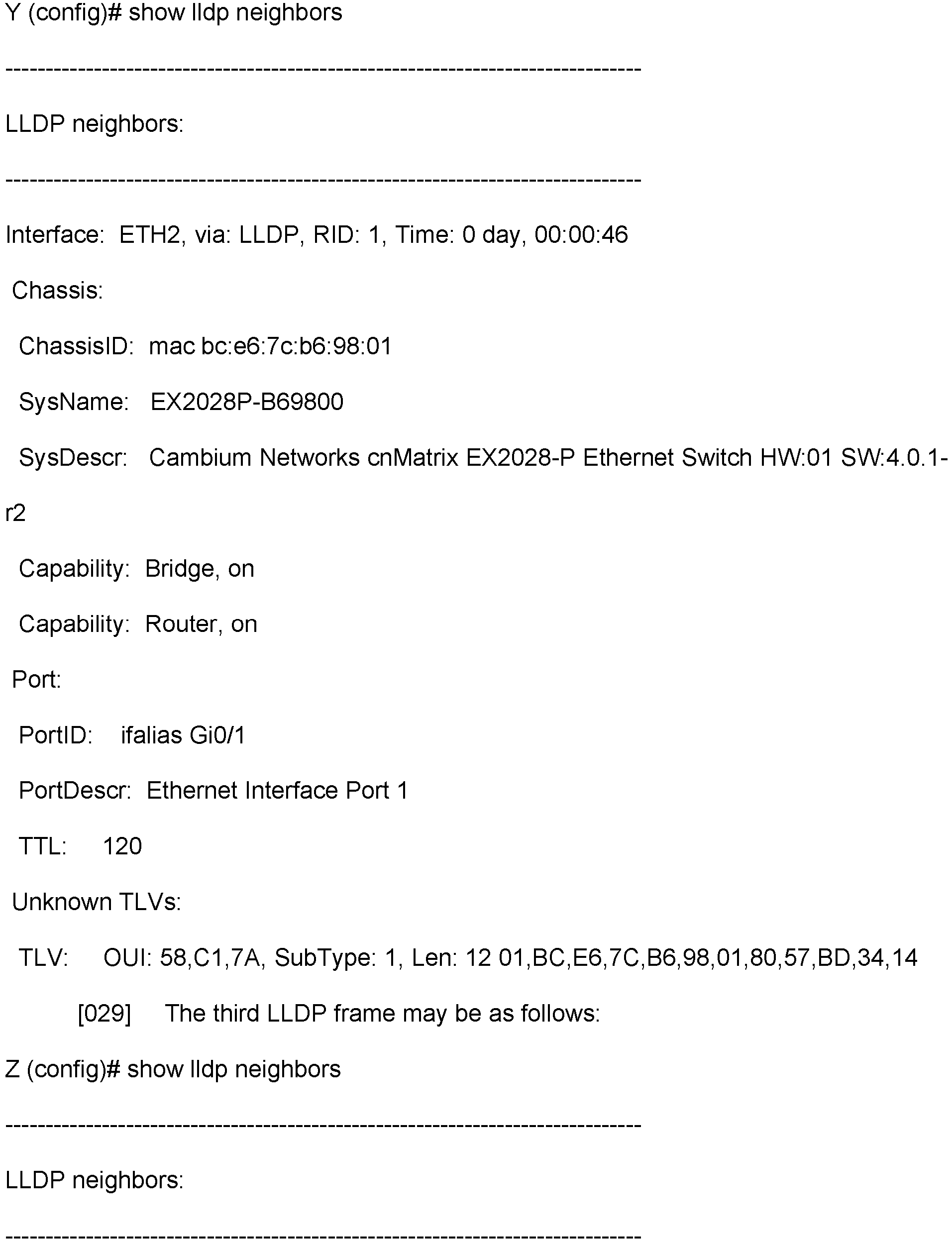

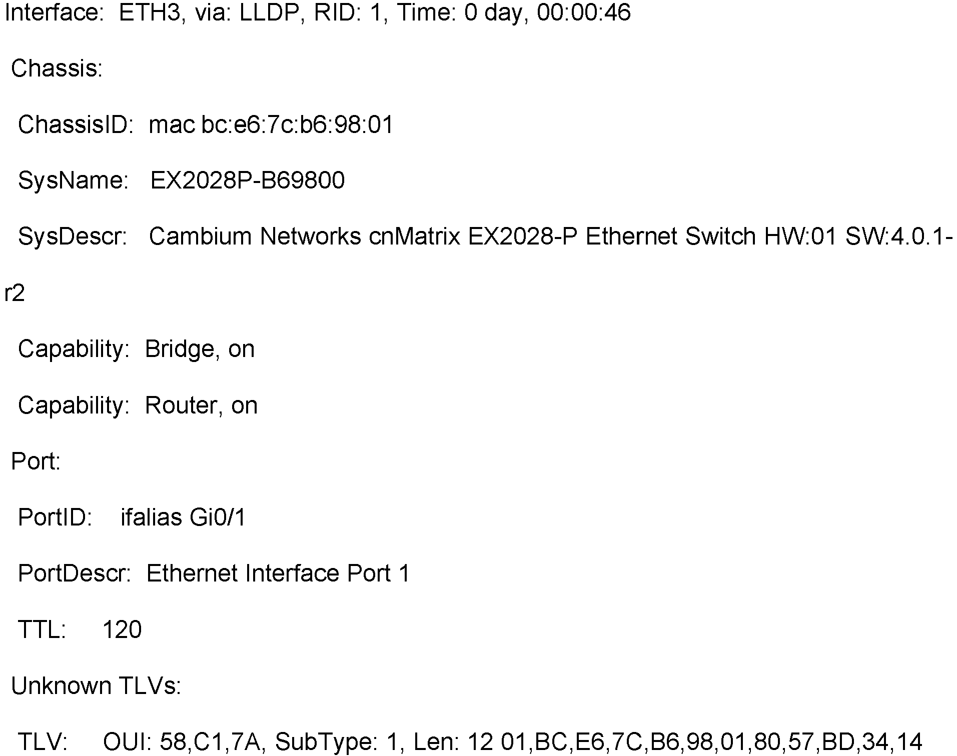

The data processing module 216 may extract information related to each interface and port available in the network node 206A, the network node 206B, and the network node 206C from the first LLDP frame, the second LLDP frame, and the third LLDP frame, respectively. Further, the data processing module 216 may combine the first LLDP frame, the second LLDP frame, and the third LLDP frame into a single data packet. Further, the transmitter 214 may transmit the single data packet to the AP node 204.

In continuation of the example above, the single data packet may be as follows:

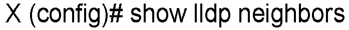

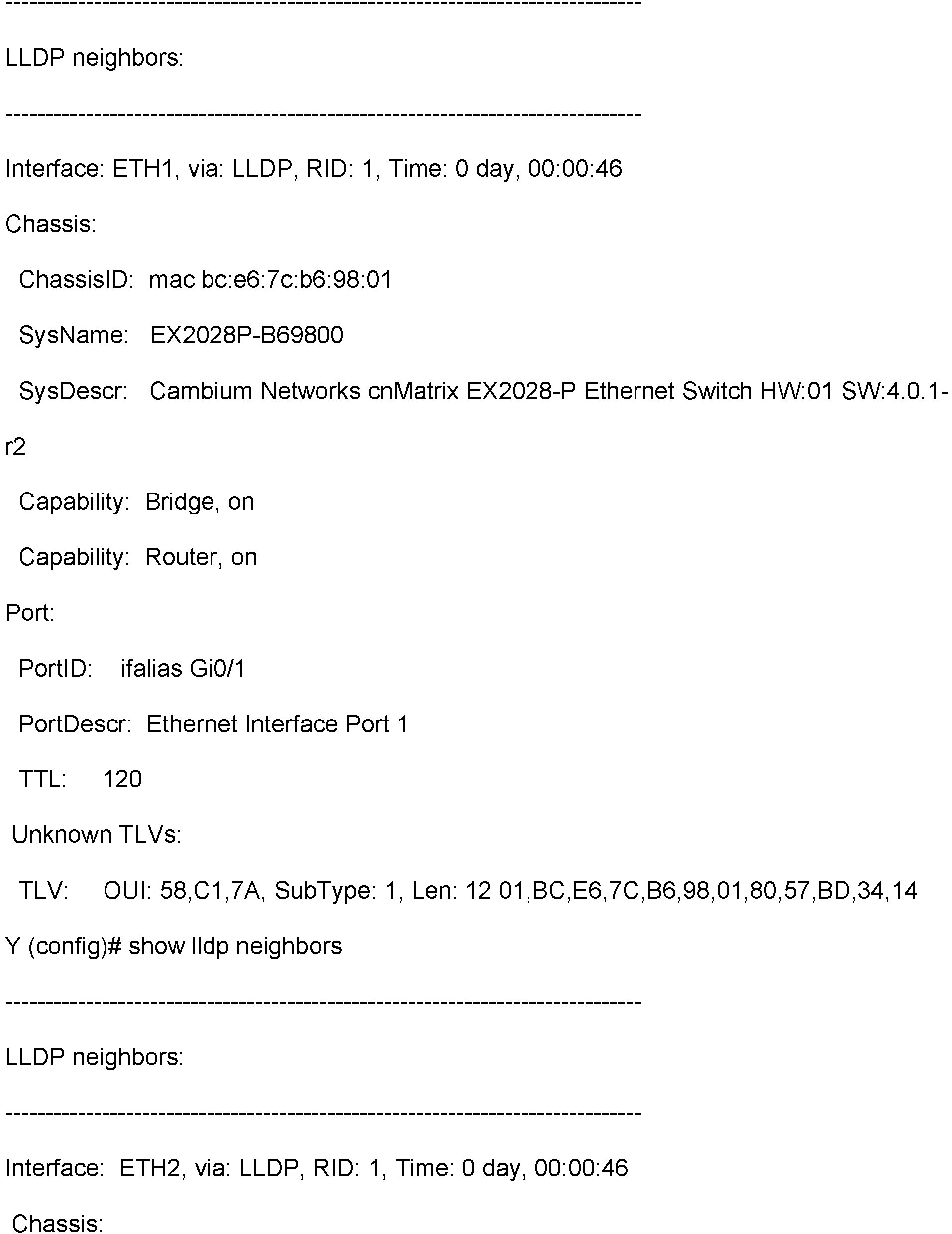

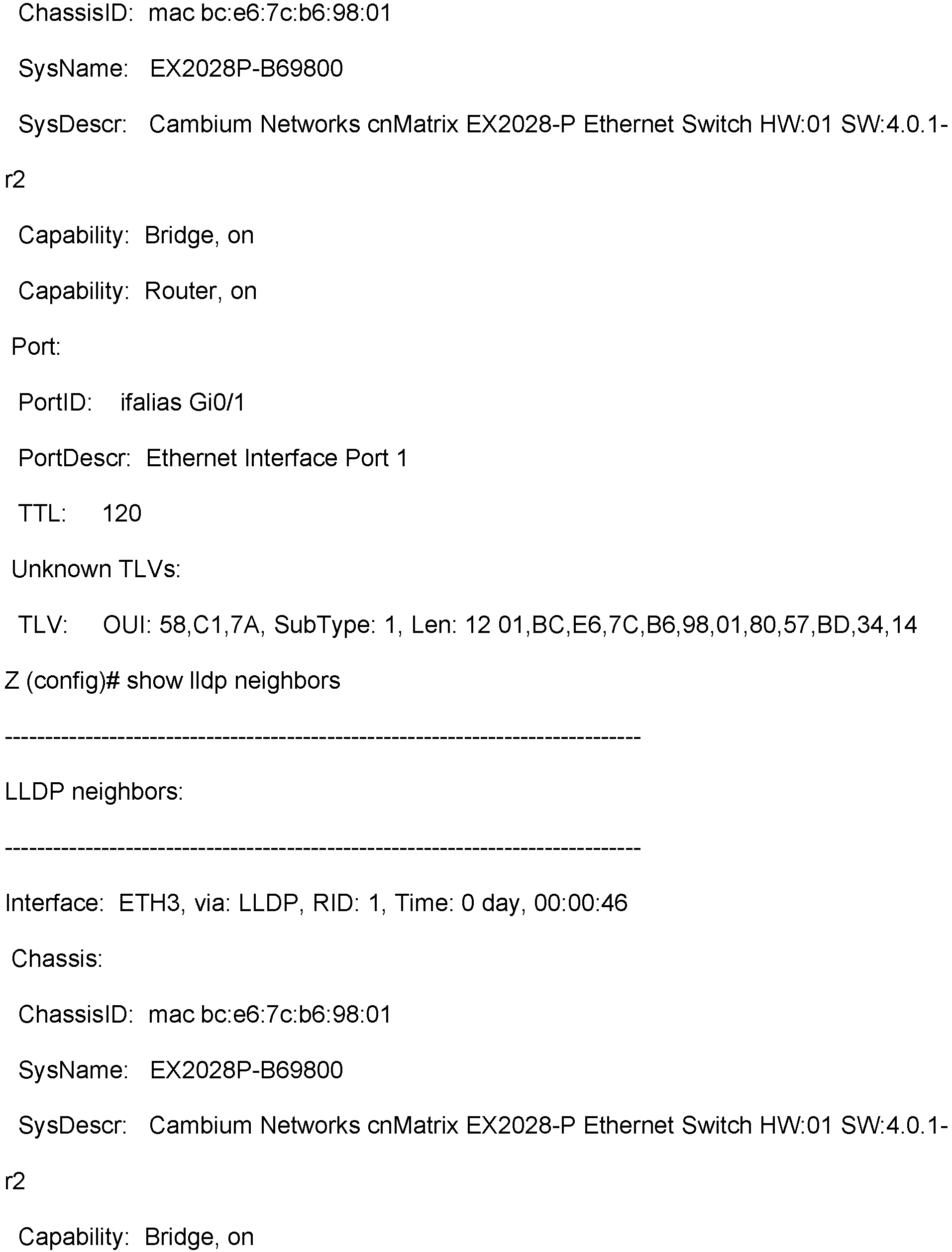

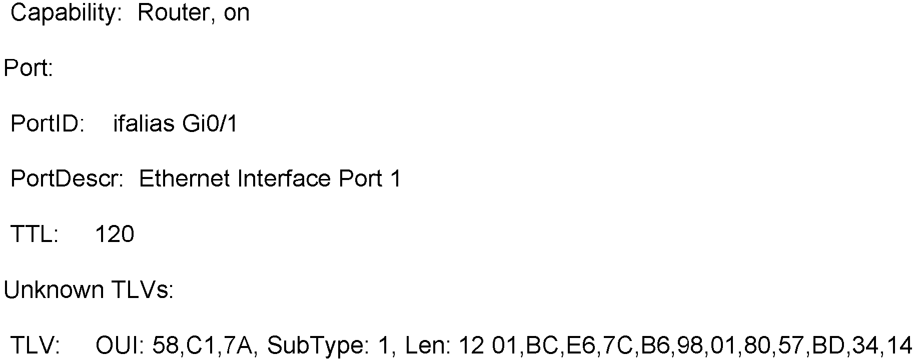

The receiver 222 of the AP node 204 may receive the single data packet from the transmitter 214 of the processing node 202. Thus, the processing node 202 collects LLDP frames from all ports in the network, combines the LLDP frames into a single data packet, and transmits the single data packet to the AP node 204 locally. The AP node 204 may manage activities of the plurality of network nodes based on the single data packet. The traffic management module 226 may then construct a network tree diagram for the network node 206A, the network node 206B, and the network node 206C based on the first LLDP frame, the second LLDP frame, and the third LLDP frame, respectively, from the single data packet. The network tree diagram may represent a network topology indicating information exchange between the processing node 202 and the network node 206A, the network node 206B, and the network node 206C. In an embodiment, the information exchange may correspond to direction of information flow (i.e., uplink transmission or downlink transmission). In such an embodiment, the network tree diagram may include representations of network nodes connected by directed arrows based on the direction of information flow (for example, if the information flow is from the network node 206A to the network node 206B, the network tree diagram may include a unidirectional arrow from the network node 206A to the network node 206B). In another embodiment, the information exchange may correspond to volume of information flow (i.e., size of data being exchanged). In such an embodiment, the network tree diagram may include representations of network nodes connected by arrows of variable thickness based on the volume of information flow (for example, if the information flow between network node 206A and the network node 206B is of high volume, the network tree diagram may include a thick arrow connecting the network node 206A and the network node 206B). Alternatively, the network tree diagram may include representations of network nodes connected by arrows of variable colors based on the volume of information flow (for example, if the information flow between network node 206A and the network node 206B is of high volume, the network tree diagram may include a red colored arrow connecting the network node 206A and the network node 206B). Further, the traffic management module 226 may manage a traffic of the plurality of network nodes based on the network tree diagram.

The communication control module 228 may analyse the first LLDP frame, the second LLDP frame, and the third LLDP frame from the single data packet. The analysis may include processing the information of the first LLDP frame, the second LLDP frame, and the third LLDP frame based on a set of predefined analysis rules. In an embodiment, the analysis may determine a type of device corresponding to each of the plurality of network nodes. For example, the communication control module 228 may analyse the first LLDP frame to determine that the network node 206A is a Voice over Internet Protocol (VoIP) and may analyse the second LLDP frame to determine that the network node 206B is a video device. The communication control module 228 may determine a type of communication to be performed by each of the network node 206A, the network node 206B, and the network node 206C based on the analysis of the first LLDP frame, the second LLDP frame, and the third LLDP frame, respectively. The communication control module 228 may assign a priority level to each of the network node 206A, the network node 206B, and the network node 206C based on the determined type of communication. In continuation of the example above, the communication control module 228 may determine that the type of communication for the network node 206A is voice communication and the type of communication for the network node 206B is video communication. Based on a set of predefined priority rules, the communication control module 228 may assign the priority level to each of the network node 206A and the network node 206B. For example, in the set of predefined priority rules, the voice communication may correspond to a high priority level and the video communication may correspond to a normal priority level. Further, the communication control module 228 may control the communication of each of the network node 206A, the network node 206B, and the network node 206C based on the assigned priority level.

It should be noted that all such aforementioned modules 216, 226, and 228 may be represented as a single module or a combination of different modules. Further, as will be appreciated by those skilled in the art, each of the modules 216, 226, and 228 may reside, in whole or in parts, on one device or multiple devices in communication with each other. In some embodiments, each of the modules 216, 226, and 228 may be implemented as dedicated hardware circuit comprising custom application-specific integrated circuit (ASIC) or gate arrays, off-the-shelf semiconductors such as logic chips, transistors, or other discrete components. Each of the modules 216, 226, and 228 may also be implemented in a programmable hardware device such as a field programmable gate array (FPGA), programmable array logic, programmable logic device, and so forth. Alternatively, each of the modules 216, 226, and 228 may be implemented in software for execution by various types of processors (e.g., the processor 208 or the processor 218). An identified module of executable code may, for instance, include one or more physical or logical blocks of computer instructions, which may, for instance, be organized as an object, procedure, function, or other construct. Nevertheless, the executables of an identified module or component need not be physically located together, but may include disparate instructions stored in different locations which, when joined logically together, include the module and achieve the stated purpose of the module. Indeed, a module of executable code could be a single instruction, or many instructions, and may even be distributed over several different code segments, among different applications, and across several memory devices.

As will be appreciated by one skilled in the art, a variety of processes may be employed for managing data transmission between a plurality of network nodes of a distributed network. For example, the exemplary system 200 may manage data transmission between a plurality of network nodes of a distributed network by the processes discussed herein. In particular, as will be appreciated by those of ordinary skill in the art, control logic and/or automated routines for performing the techniques and steps described herein may be implemented by the system 200 either by hardware, software, or combinations of hardware and software. For example, suitable code may be accessed and executed by the one or more processors on the system 200 to perform some or all of the techniques described herein. Similarly, application specific integrated circuits (ASICs) configured to perform some, or all of the processes described herein may be included in the one or more processors on the system 200.

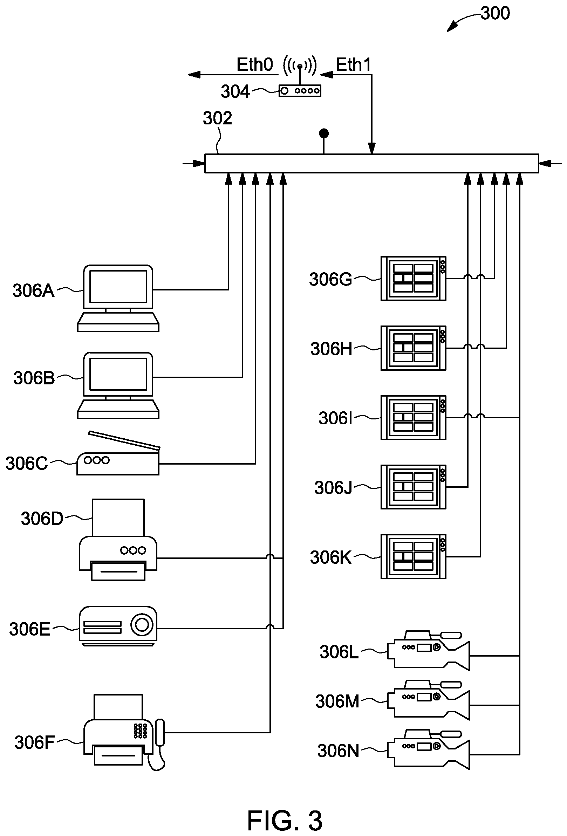

Referring now to FIG. 3, a block diagram of an exemplary system 300 for managing communication between various types of network nodes in a distributed network is illustrated, in accordance with some embodiments. The system 300 may be analogous to the system 200. The system 300 may include a switch 302 (analogous to the processing node 202), an AP node 304 (analogous to the AP node 204), and a plurality of network nodes. The switch 302 may be a cnMatrix enterprise switch. The plurality of network nodes may include, but may not be limited to, a computer 306A, a computer 306B, a scanner 306C, a printer 306D, a projector 306E, a facsimile (FAX) machine 306F, a Raspberry Pi 306G, a Raspberry Pi 306H, a Raspberry Pi 306I, a Raspberry Pi 306J, a Raspberry Pi 306K, a video camera 306L, a video camera 306M, and a video camera 306N.

The switch 302 may be connected to the AP node 304 over an Eth1 network interface. The AP node 304 may be connected to a server (such as the server 108) or another AP node over an Eth0 interface. The switch may be connected to each of the plurality of network nodes over Virtual Local Area Network (VLAN) channels (for example, VLAN 1, 9, 99, 999, 1999). The switch 302 may receive an LLDP frame from each network node of the plurality of network nodes. The switch 302 may extract information related to each interface and port available in the plurality of network nodes from the LLDP frame. Further, the switch 302 may transmit the information in a single data packet to the AP node 304.

For example, in the computer 306A, 2 interfaces and ports are available and in the scanner 306C, 1 interface and port is available. The switch 302 may receive 3 LLDP frames corresponding to a first interface and port of the computer 306A, a second interface and port of the computer 306A, and an interface and port of the scanner 306C. The switch may extract the information from each of the 3 LLDP frames and merge the extracted information into a single data packet. Further, the switch 302 may transmit the single data packet to the AP node 304 for further processing. By way of an example, the further processing may include traffic management in the network by constructing a network tree and communication control of the plurality of network nodes by prioritizing the plurality of network nodes based on analysis of a corresponding plurality of LLDP frames.

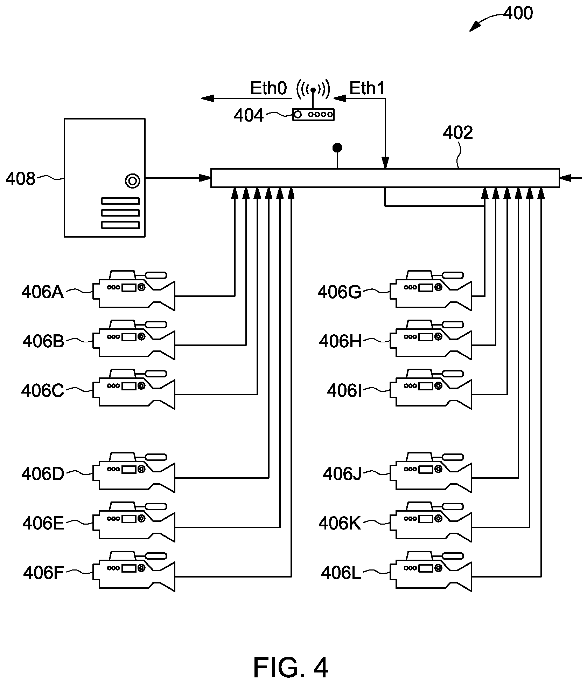

Referring now to FIG. 4, a block diagram of an exemplary system 400 for managing communication between network nodes of various vendors in a distributed network is illustrated, in accordance with some embodiments. The system 400 may be analogous to the system 200. The system 400 may include a switch 402, an AP node 404, and a plurality of network nodes. The plurality of network nodes may include a video camera 406A, a video camera 406B, a video camera 406C, a video camera 406D, a video camera 406E, a video camera 406F, a video camera 406G, a video camera 406H, a video camera 406I, a video camera 406J, a video camera 406K, and a video camera 406L. The plurality of network nodes may be manufactured by different vendors (i.e., Original Equipment Manufacturers (OEMs)). For example, the OEM of the video camera 406A may be different from the OEM of the video camera 406L. A Dynamic Host Configuration Protocol (DHCP) server 408 may be configured on the switch 402 to assign Internet Protocol (IP) address to each of the plurality of network nodes over VLAN channels (for example, VLAN 1, 9, 99, 999, 1999).

The switch 402 may receive an LLDP frame from each network node of the plurality of network nodes. For example, the video camera 406A may be manufactured by a first OEM. The video camera 406L may be manufactured by a second OEM. As will be appreciated by those skilled in the art, LLDP is an open source, vendor-neutral protocol. Hence, even though the video camera 406A and the video camera 406L are manufactured by different OEMs, each of the video camera 406A and the video camera 406L is configured to send a corresponding LLDP frame to the switch 402. Further, the switch 402 may extract information related to each interface and port available in the video camera 406A and the video camera 406L from the corresponding LLDP frame. Further, the switch 402 may merge the LLDP frame received from the video camera 406A and the LLDP frame received from the video camera 406L to obtain a single data packet. The switch 402 may then transmit the single data packet to the AP node 404 for further processing.

Thus, the system 400 is vendor-neutral and overcomes the challenge of managing data transmission of a plurality of network nodes when the plurality of network nodes may be manufactured by different OEMs. The system 400 may enable obtaining of details related to PoE, VLAN, port status, and IP.

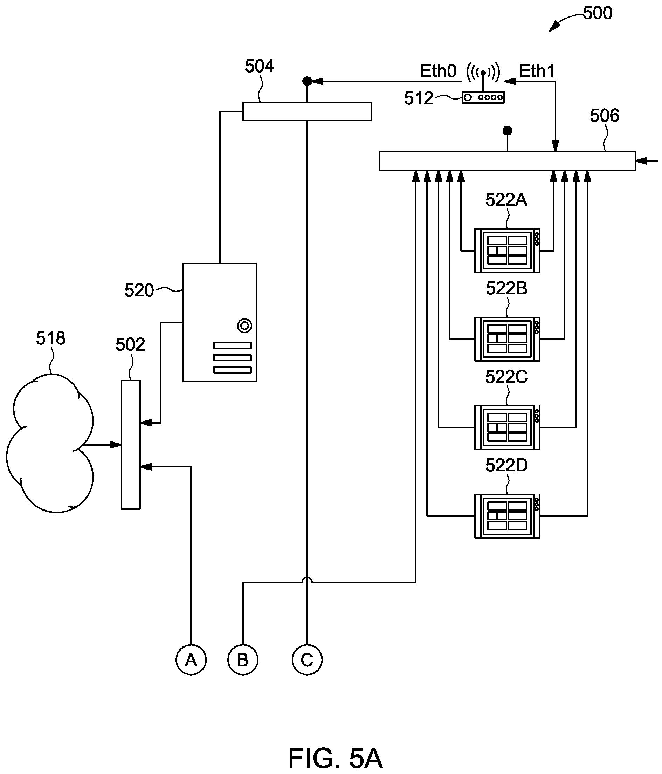

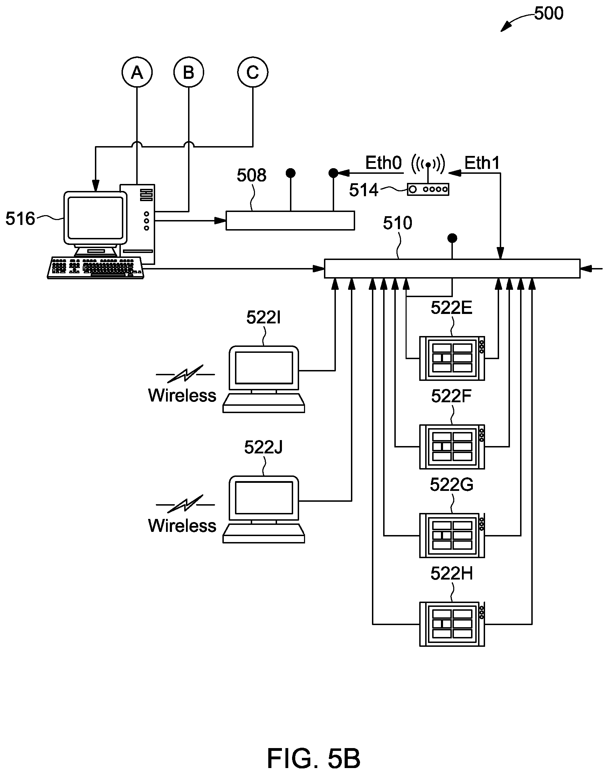

Referring now to FIGS. 5A and 5B, a block diagram of an exemplary system 500 for managing communication between network nodes in a complex distributed network is illustrated, in accordance with some embodiments. The system 500 may be analogous to the system 200. The system 500 may include a first switch 502, a second switch 504, a third switch 506, a fourth switch 508, a fifth switch 510, a first AP node 512, a second AP node 514, an automation server 516, a cloud server 518 (analogous to the server 108), and a plurality of network nodes. The second switch 504 may be connected to the first switch 502 via a DHCP server 520. The plurality of network nodes may include a Raspberry Pi 522A, a Raspberry Pi 522B, a Raspberry Pi 522C, a Raspberry Pi 522D, a Raspberry Pi 522E, a Raspberry Pi 522F, a Raspberry Pi 522G, a Raspberry Pi 522H, a computer 522I, and a computer 522J.

The Raspberry Pi 522A, the Raspberry Pi 522B, the Raspberry Pi 522C, and the Raspberry Pi 522D may be connected to the third switch 506. The Raspberry Pi 522E, the Raspberry Pi 522F, the Raspberry Pi 522G, the Raspberry Pi 522H, the computer 522I, and the computer 522J may be connected to the fifth switch 510. The first AP node 512 may be connected to the second switch 504. The second AP node 514 may be connected to the fourth switch 508. The first AP node 512 may be configured as a mesh base. The second AP node 514 may be configured as a mesh client.

In conventional techniques (i.e., when the second user command is received by each of the first switch 502, the second switch 504, the third switch 506, the fourth switch 508, and the fifth switch 510), the cloud server 518 may fail to determine network topology as the cloud server 518 is isolated from Internet Service Provider (ISP) and mesh networks. The cloud server 518 may receive individual LLDP frames from the plurality of network nodes through plurality of switches (i.e., the first switch 502, the second switch 504, the third switch 506, the fourth switch 508, and the fifth switch 510).

The automation server 516 may be connected to each of the first switch 502, the second switch 504, the third switch 506, the fourth switch 508, and the fifth switch 510. Each of the third switch 506 and the fifth switch 510 may receive an LLDP frame from each network node of the plurality of network nodes. When the first user command is received, then each of the third switch 506 and the fifth switch 510 may extract information related to each interface and port available in the plurality of network nodes from the LLDP frame.

For example, the third switch 506 may extract information related to each interface and port available in the Raspberry Pi 522A, the Raspberry Pi 522B, the Raspberry Pi 522C, and the Raspberry Pi 522D from corresponding LLDP frames. Further, the third switch 506 may combine the information extracted from each of the corresponding LLDP frames into a first combined data packet. The third switch 506 may then transmit the first combined data packet to the first AP node 512. The first AP node 512 may determine the network topology based on the first combined data packet. Additionally, the first AP node 512 may determine priorities of the plurality of network nodes based on the first combined data packet. The first AP node 512 may transmit the first combined data packet to the second switch 504. The second switch 504 may transmit the first combined data packet to the first switch 502.

The fifth switch 510 may extract information related to each interface and port available in the Raspberry Pi 522E, the Raspberry Pi 522F, the Raspberry Pi 522G, the Raspberry Pi 522H, the computer 522I, and the computer 522J from corresponding LLDP frames. Further, the fifth switch 510 may combine the information extracted from each of the corresponding LLDP frames into a second combined data packet. The fifth switch 510 may then transmit the second combined data packet to the second AP node 514. The second AP node 514 may determine the network topology based on the second combined data packet. Additionally, the second AP node 514 may determine priorities of the plurality of network nodes based on the second combined data packet. The second AP node 514 may transmit the second combined data packet to the fourth switch 508. The fourth switch 508 may transmit the second combined data packet to the first switch 502.

The first switch 502 may merge the first combined data packet and the second combined data packet to obtain the single data packet that includes the information related to each interface and port available in the plurality of network nodes in the network. Further, the first switch 502 may transmit the single data packet to the cloud server 518. Additionally, the first switch 502 may manage data transmission among the plurality of network nodes based on the determined priorities (by the first AP node 512 and the second AP node 514) through the automation server 516. This may save more time as compared to the conventional techniques as for some of the plurality of network nodes, an IP address may not be assigned because mesh client is not up.

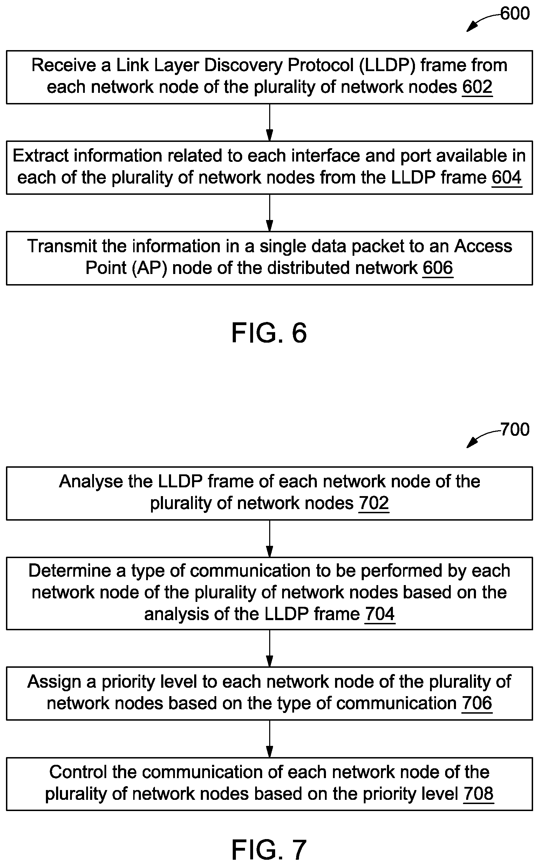

Referring now to FIG. 6, an exemplary process 600 for data transmission between a plurality of network nodes of a distributed network (such as the network 100) is depicted via a flowchart, in accordance with some embodiments. The process 600 may be implemented by the system 200. The process 600 may include receiving, by the receiver 212, an LLDP frame from each network node of the plurality of network nodes, at step 602.

Further, the process 600 may include extracting, by the data processing module 216, information related to each interface and port available in the plurality of network nodes from the LLDP frame, at step 604.

Further, the process 600 may include transmitting, by the transmitter 214, the information in a single data packet to an AP node (such as the AP node 204) of the distributed network, at step 606.

Referring now to FIG. 7, an exemplary process 700 for controlling communication of each of a plurality of network nodes of a distributed network (such as the network 100) is depicted via a flowchart, in accordance with some embodiments. The process 700 may be implemented by the system 200. The process 700 may include analysing, by the communication control module 228, the LLDP frame of each network node of the plurality of network nodes, at step 702.

Further, the process 700 may include determining, by the communication control module 228, a type of communication to be performed by each network node of the plurality of network nodes based on the analysis of the LLDP frame, at step 704.

Further, the process 700 may include assigning, by the communication control module 228, a priority level to each network node of the plurality of network nodes based on the type of communication, at step 706.

Further, the process 700 may include controlling, by the communication control module 228, the communication of each network node of the plurality of network nodes based on the priority level, at step 708.

As will be also appreciated, the above described techniques may take the form of computer or controller implemented processes and apparatuses for practicing those processes. The disclosure can also be embodied in the form of computer program code containing instructions embodied in tangible media, such as floppy diskettes, solid state drives, CD-ROMs, hard drives, or any other computer-readable storage medium, wherein, when the computer program code is loaded into and executed by a computer or controller, the computer becomes an apparatus for practicing the invention. The disclosure may also be embodied in the form of computer program code or signal, for example, whether stored in a storage medium, loaded into and/or executed by a computer or controller, or transmitted over some transmission medium, such as over electrical wiring or cabling, through fiber optics, or via electromagnetic radiation, wherein, when the computer program code is loaded into and executed by a computer, the computer becomes an apparatus for practicing the invention. When implemented on a general-purpose microprocessor, the computer program code segments configure the microprocessor to create specific logic circuits.

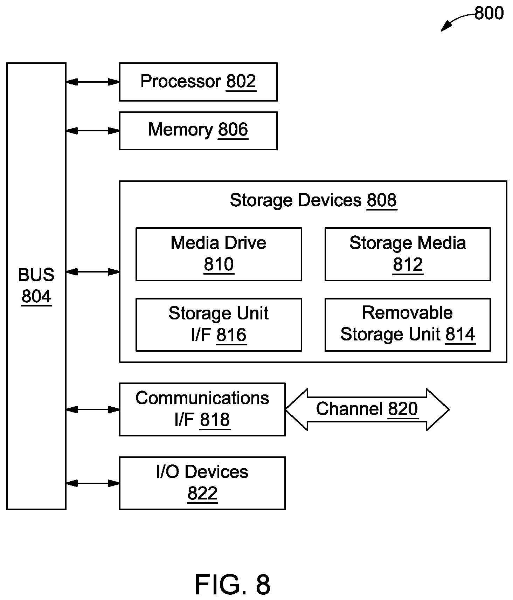

The disclosed methods and systems may be implemented on a conventional or a general-purpose computer system, such as a personal computer (PC) or server computer. Referring now to FIG. 8, an exemplary computing system 800 that may be employed to implement processing functionality for various embodiments (e.g., as a SIMD device, client device, server device, one or more processors, or the like) is illustrated. Those skilled in the relevant art will also recognize how to implement the invention using other computer systems or architectures. The computing system 800 may represent, for example, a user device such as a desktop, a laptop, a mobile phone, personal entertainment device, DVR, and so on, or any other type of special or general-purpose computing device as may be desirable or appropriate for a given application or environment. The computing system 800 may include one or more processors, such as a processor 802 that may be implemented using a general or special purpose processing engine such as, for example, a microprocessor, microcontroller or other control logic. In this example, the processor 802 is connected to a bus 804 or other communication medium. In some embodiments, the processor 802 may be an Artificial Intelligence (AI) processor, which may be implemented as a Tensor Processing Unit (TPU), or a graphical processor unit, or a custom programmable solution Field-Programmable Gate Array (FPGA).

The computing system 800 may also include a memory 806 (main memory), for example, Random Access Memory (RAM) or other dynamic memory, for storing information and instructions to be executed by the processor 802. The memory 806 also may be used for storing temporary variables or other intermediate information during execution of instructions to be executed by the processor 802. The computing system 800 may likewise include a read only memory ("ROM") or other static storage device coupled to bus 804 for storing static information and instructions for the processor 802.

The computing system 800 may also include a storage device 808, which may include, for example, a media drive 810 and a removable storage interface. The media drive 810 may include a drive or other mechanism to support fixed or removable storage media, such as a hard disk drive, a floppy disk drive, a magnetic tape drive, an SD card port, a USB port, a micro USB, an optical disk drive, a CD or DVD drive (R or RW), or other removable or fixed media drive. A storage media 812 may include, for example, a hard disk, magnetic tape, flash drive, or other fixed or removable medium that is read by and written to by the media drive 810. As these examples illustrate, the storage media 812 may include a computer-readable storage medium having stored there in particular computer software or data.

In alternative embodiments, the storage devices 808 may include other similar instrumentalities for allowing computer programs or other instructions or data to be loaded into the computing system 800. Such instrumentalities may include, for example, a removable storage unit 814 and a storage unit interface 816, such as a program cartridge and cartridge interface, a removable memory (for example, a flash memory or other removable memory module) and memory slot, and other removable storage units and interfaces that allow software and data to be transferred from the removable storage unit 814 to the computing system 800.

The computing system 800 may also include a communications interface 818. The communications interface 818 may be used to allow software and data to be transferred between the computing system 800 and external devices. Examples of the communications interface 818 may include a network interface (such as an Ethernet or other NIC card), a communications port (such as for example, a USB port, a micro USB port), Near field Communication (NFC), etc. Software and data transferred via the communications interface 818 are in the form of signals which may be electronic, electromagnetic, optical, or other signals capable of being received by the communications interface 818. These signals are provided to the communications interface 818 via a channel 820. The channel 820 may carry signals and may be implemented using a wireless medium, wire or cable, fiber optics, or other communication mediums. Some examples of the channel 820 may include a phone line, a cellular phone link, an RF link, a Bluetooth link, a network interface, a local or wide area network, and other communications channels.

The computing system 800 may further include Input/Output (I/O) devices 822. Examples may include, but are not limited to a display, keypad, microphone, audio speakers, vibrating motor, LED lights, etc. The I/O devices 822 may receive input from a user and also display an output of the computation performed by the processor 802. In this document, the terms "computer program product" and "computer-readable medium" may be used generally to refer to media such as, for example, the memory 806, the storage devices 808, the removable storage unit 814, or signal(s) on the channel 820. These and other forms of computer-readable media may be involved in providing one or more sequences of one or more instructions to the processor 802 for execution. Such instructions, generally referred to as "computer program code" (which may be grouped in the form of computer programs or other groupings), when executed, enable the computing system 800 to perform features or functions of embodiments of the present invention.

In an embodiment where the elements are implemented using software, the software may be stored in a computer-readable medium and loaded into the computing system 800 using, for example, the removable storage unit 814, the media drive 810 or the communications interface 818. The control logic (in this example, software instructions or computer program code), when executed by the processor 802, causes the processor 802 to perform the functions of the invention as described herein.

Thus, the disclosed method and system try to overcome the technical problem of managing data transmission between a plurality of network nodes of a distributed network. The method and system receive, by a processing node, a Link Layer Discovery Protocol (LLDP) frame from each network node of the plurality of network nodes. Further, the method and system extract, by the processing node, information related to each interface and port available in the plurality of network nodes from the LLDP frame. Further, the method and system transmit, by the processing node, the information in a single data packet to an Access Point (AP) node of the distributed network.

As will be appreciated by those skilled in the art, the techniques described in the various embodiments discussed above are not routine, or conventional, or well understood in the art. The techniques discussed above provide for managing data transmission between a plurality of network nodes of a distributed (i.e., decentralized) network. The techniques enable determination of network topologies from LLDP frames received from a plurality of network nodes using a single data packet. The techniques reduce latency in network management by generating a single data packet by the processing nodes (e.g., switches and bridges) that includes information related to each interface and port available in the plurality of network nodes. The techniques enable compilation of the information into a single data packet using a single user command (i.e., the first user command). Since LLDP frames are collected locally for wired connected devices, the techniques avoid use of third-party tools for device fingerprints. Further, the techniques enable collection of all supported LLDP attributes such as layer 2 information, PoE, etc.

In light of the above-mentioned advantages and the technical advancements provided by the disclosed method and system, the claimed steps as discussed above are not routine, conventional, or well understood in the art, as the claimed steps enable the following solutions to the existing problems in conventional technologies. Further, the claimed steps clearly bring an improvement in the functioning of the device itself as the claimed steps provide a technical solution to a technical problem.

The specification has described method and system for managing data transmission between a plurality of network nodes of a distributed network. The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope and spirit of the disclosed embodiments.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope and spirit of disclosed embodiments being indicated by the following claims.

## Claims

1. A method of data transmission between a plurality of network nodes of a distributed network, the method comprising:
receiving, by a processing node, a Link Layer Discovery Protocol (LLDP) frame from each network node of the plurality of network nodes;
extracting, by the processing node, information related to each interface and port available in the plurality of network nodes from the LLDP frame; and
transmitting, by the processing node, the information in a single data packet to an Access Point (AP) node of the distributed network.

2. The method of claim 1, further comprising receiving a user command to enable extraction of the information related to each interface and port available in the plurality of network nodes from the LLDP frame.

3. The method of claim 1 or claim 2, wherein the information related to each interface and port available in the plurality of network nodes comprises at least one of Chassis identity (ID), port ID, port details, Operation System (OS) details, Power over Ethernet (PoE), Virtual Local Area Network (VLAN), location, media capabilities, networks policies, custom Type-Length-Values (TLVs), system description, system capabilities, and managed address.

4. The method of any preceding claim, further comprising:
constructing a network tree diagram for the plurality of network nodes based on the LLDP frame; and
managing traffic of the plurality of network nodes based on the network tree diagram.

5. The method of any preceding claim, further comprising:
analysing the LLDP frame of each network node of the plurality of network nodes;
determining a type of communication to be performed by each network node of the plurality of network nodes based on the analysis of the LLDP frame;
assigning a priority level to each network node of the plurality of network nodes based on the type of communication; and
controlling the communication of each network node of the plurality of network nodes based on the priority level.

6. The method of any preceding claim, wherein each network node of the plurality of network nodes is one of a router, a switch, a transmitter, a receiver, an Internet Protocol (IP) telephone, an IP video camera, a wireless AP, a repeater, a bridge, or an end computing device.

7. A processing node comprising:
a processor; and
a memory communicatively coupled to the processor and comprising processor instructions that when executed by the processor, cause the processor to:
receive a Link Layer Discovery Protocol (LLDP) frame from each network node of a plurality of network nodes of a distributed network;
extract information related to each interface and port available in the plurality of network nodes from the LLDP frame; and
transmit the information in a single data packet to an Access Point (AP) node of the distributed network.

8. The processing node of claim 7, wherein the processor instructions, when executed by the processor, further cause the processor to receive a user command to enable extraction of the information related to each interface and port available in the plurality of network nodes from the LLDP frame.

9. The processing node of claim 7 or claim 8, wherein the information related to each interface and port available in the plurality of network nodes comprises at least one of Chassis identity (ID), port id, port details, Operation System (OS) details, Power over Ethernet (PoE), Virtual Local Area Network (VLAN), location, media capabilities, networks policies, custom Type-Length-Values (TLVs), system description, system capabilities, and managed address.

10. The processing node of any one of claims 7 to 9, wherein the processor instructions, when executed by the processor, further cause the processor to:
construct a network tree diagram for the plurality of network nodes based on the LLDP frame; and
manage traffic of the plurality of network nodes based on the network tree diagram.

11. The processing node of any one of claims 7 to 10, wherein the processor instructions, when executed by the processor, further cause the processor to:
analyse the LLDP frame of each network node of the plurality of network nodes;
determine a type of communication to be performed by each network node of the plurality of network nodes based on the analysis of the LLDP frame;
assign a priority level to each network node of the plurality of network nodes based on the type of communication; and
control the communication of each network node of the plurality of network nodes based on the priority level.

12. A system for managing communication between a plurality of network nodes of a distributed network, the system comprises:
a processing node comprising:
a first processor; and
a first memory communicatively coupled to the first processor and comprising first processor instructions that when executed by the first processor, cause the first processor to:
receive a Link Layer Discovery Protocol (LLDP) frame from each network node of the plurality of network nodes;
extract information related to each interface and port available in the plurality of network nodes from the LLDP frame; and
transmit the information in a single data packet to an Access Point (AP)
node of the distributed network; and
the AP node comprising:
a second processor; and
a second memory communicatively coupled to the second processor and comprising second processor instructions that when executed by the second processor, cause the second processor to:
receive the information related to each interface and port available in the plurality of network nodes; and
manage activities of the plurality of network nodes based on the information related to each interface and port available in the plurality of network nodes.
